# EUROPEAN PATENT APPLICATION

(11) **EP 2 014 965 A2**
(43) Date of publication of application: **14.01.2009**
(21) Application number: 08251804.4
(22) Date of filing: 23.05.2008
(51) Int. Cl.: F16L 1/20

(54) **Strongback traveling clamp**

(30) Priority: 08.06.2007 US 760008
(71) Applicant: J.Ray McDermott, S.A., Houston, Texas 77079 (US)
(72) Inventor: Katterhenry, Brian M., Houston Texas 77084 (US); Kannan, Ravi Kumar, Morgan City LA, 703880 (US); Wilson, William J., LA Place LA, 70068 (US); Zaeringer, Kevin P., Metarie LA, 70005 (US); Bassett, McArthur, Morgan City LA 70380 (LA); Alexander, Jr., Mark T., Youngsville LA, 70592 (US); Heitkamp, Roy S., Covington LA, 70435 (US)
(74) Representative: Meldrum, David James

(57) **Abstract**

A modified strongback (10) for laying pipeline offshore that utilizes a movable clamp (16). One end of the strongback (12) is modified to include a travel mechanism (22). A pipe clamp (16) is mounted on the travel mechanism (22) to allow movement of the clamp (16) as necessary to accommodate different pipe joint lengths. A mechanism for locking the clamp (16) in the desired position is provided on the strongback (12).

## Description

### Field and Background of Invention

The invention is related to offshore pipe laying equipment and more particularly to equipment for handling long lengths of pipe.

Near vertical laying of pipeline offshore utilizes specialized equipment for handling lengths of pipe (pipe joints). U.S. Patents 5,421,675 and 5,464,307 are directed to equipment for near vertical laying of pipeline offshore and provide descriptions of the handling steps required for pipeline lay operations. Near vertical laying of pipeline requires equipment capable of picking up a pipe joint from the horizontal position and moving it into a near vertical position for adding it to the pipeline being installed. This equipment positions the pipe joint in alignment with the pipeline so that the pipe joint can be welded to the pipeline. Existing arrangements utilize a strongback, typically a triangular frame with clamps for gripping the pipe joint and moving it into a tower for welding to the pipeline. Depending on the vessel arrangement, the strongback or tower may be used to hold the pipe joint in position during the welding step.

To align the pipe joint coaxially with the pipe line for welding, the clamps in the strongback or tower have been adjustable in the radial direction.

In the past, four forty foot pipe sections welded together at a fabrication facility on shore has been the standard length of one pipe joint. The clamps in the strongback have been in fixed positions that are spaced specifically to handle this length pipe joint. The required number of pipe joints for a pipeline job was fabricated on shore, loaded on a barge, and transferred to the pipe lay vessel as required during the laying operation to add the pipe joints to the pipeline.

Recent changes in pipeline requirements have led to varied pipe joint lengths. The result is that the prior standard clamp spacing in the strongback is no longer able to clamp one end of the pipe joint and provide the required support over the full length of the pipe joint.

The near vertical tower in some pipe laying arrangements uses a gripper around the pipe that moves in the axial direction of the pipe for paying out the pipeline after a pipe joint has been welded to the pipeline or for purposes of aligning pipe joints for welding. However the applicants are not aware of any strongback modifications that address the need for accommodating different pipe joint lengths that allow the use of a single strongback on a vessel no matter what the current variation in pipe joint length may be. It should be kept in mind that a single pipe joint of steel pipe may weigh several tons, depending upon the diameter and wall thickness of the steel pipe. Thus, the strongback and associated equipment for handling the pipe is large, heavy, expensive and should be capable of multiple duties to provide the most cost efficient pipe laying vessels and equipment.

### Summary of Invention

The present invention is drawn to a modified strongback that utilizes a movable clamp. One end of the strongback is modified to include a travel mechanism. A pipe clamp is mounted on the travel mechanism. Means for locking the clamp in a desired position is provided on the strongback.

The various features of novelty which characterize the invention are pointed out with particularity in the claims annexed to and forming part of this disclosure. For a better understanding of the present invention, and the operating advantages attained by its use, reference is made to the accompanying drawings and descriptive matter, forming a part of this disclosure, in which a preferred embodiment of the invention is illustrated.

### Brief Description of the Drawings

In the accompanying drawings, forming a part of this specification, and in which reference numerals shown in the drawings designate like or corresponding parts throughout the same:

FIG. 1 is an elevation view of the invention.

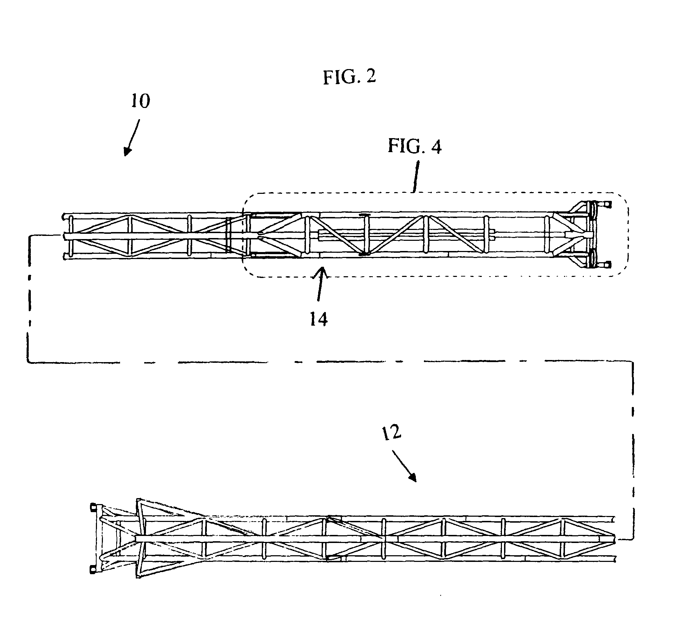

FIG. 2 is a plan view of the invention.

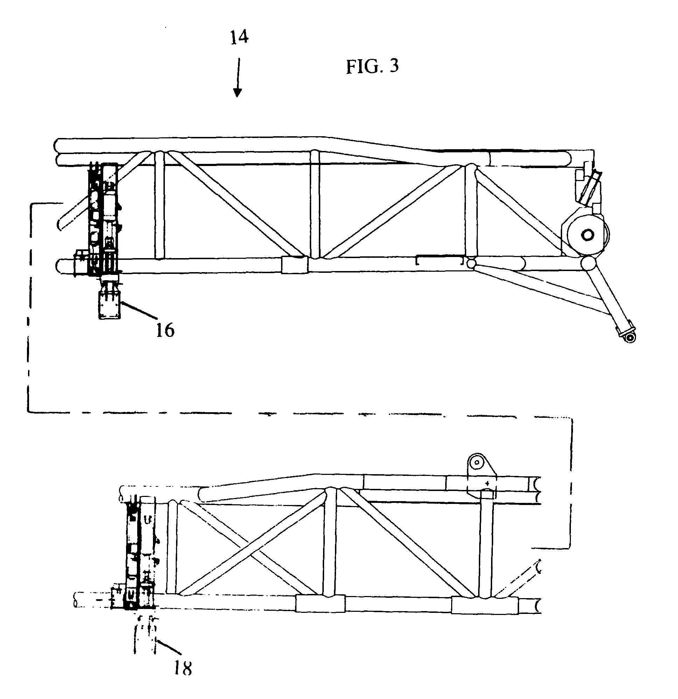

FIG. 3 is an enlarged view of the area indicated in FIG. 1.

FIG. 4 is an enlarged view of the area indicated in FIG. 2.

FIG. 5 is an elevation view similar to that of FIG. 3 that illustrates the range of the movable clamp.

FIG. 6 is a sectional elevation view as indicated by lines 6-6 in FIG. 4.

FIG. 7 and 8 are elevation views that illustrate the invention in operation with the movable clamp in different positions.

### Detailed Description

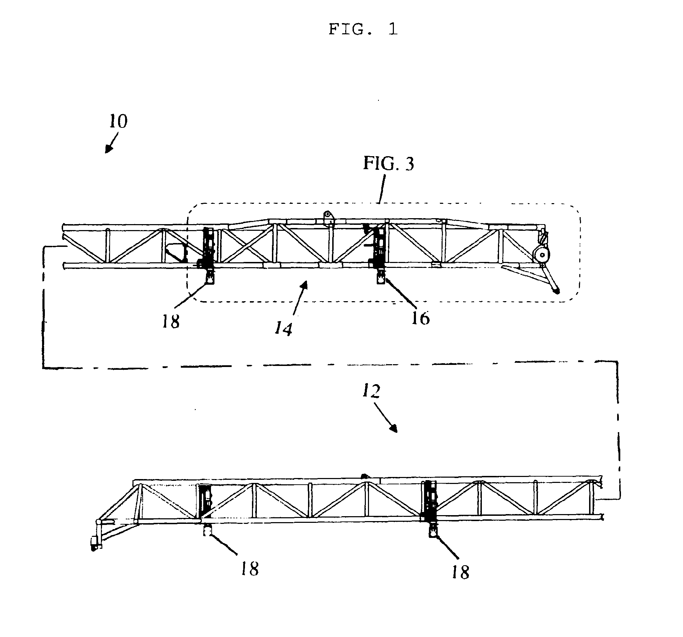

One embodiment is generally indicated in FIG. 1 by numeral 10. The improved strongback 10 is generally comprised of a strongback 12, a modified section 14 on the strongback 12, and a movable clamp 16 on the modified section 14.

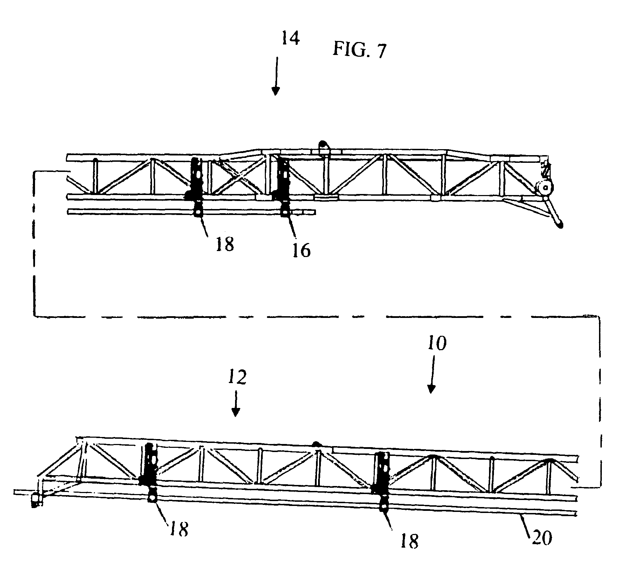

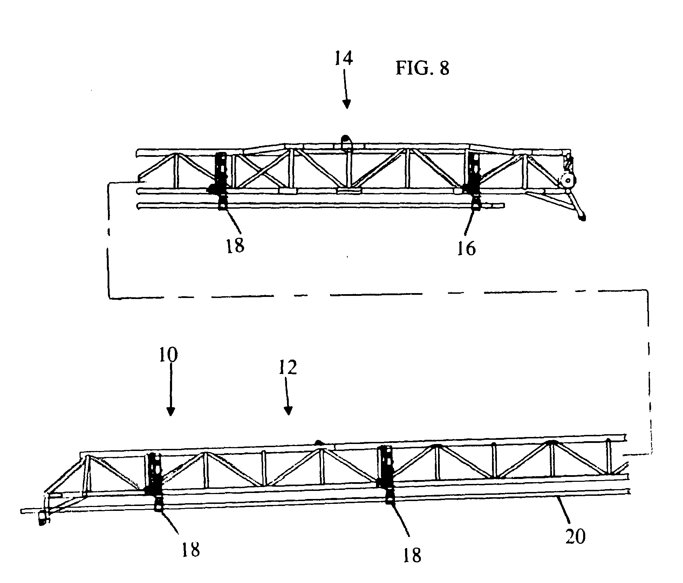

The strongback 12 is generally triangular in cross section, which is typical in the industry to provide the required strength and means for mounting clamps 18. Clamps 18 are fixed in their position relative to the length of the strongback 12. Clamps 16 and 18 are extendible along the longitudinal axis of the clamps (radially relative to the strongback 12) for gripping pipe 20 (FIG. 7 & 8) or adjusting the position of pipe 20 as required when welding a new pipe joint to the existing pipeline.

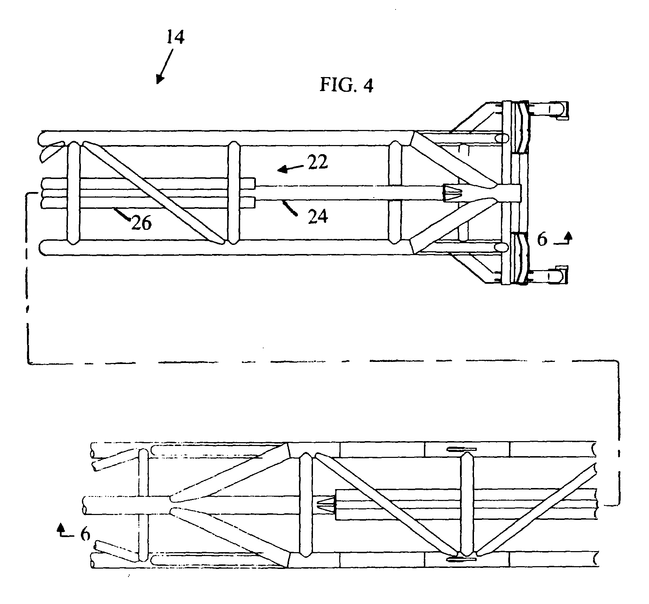

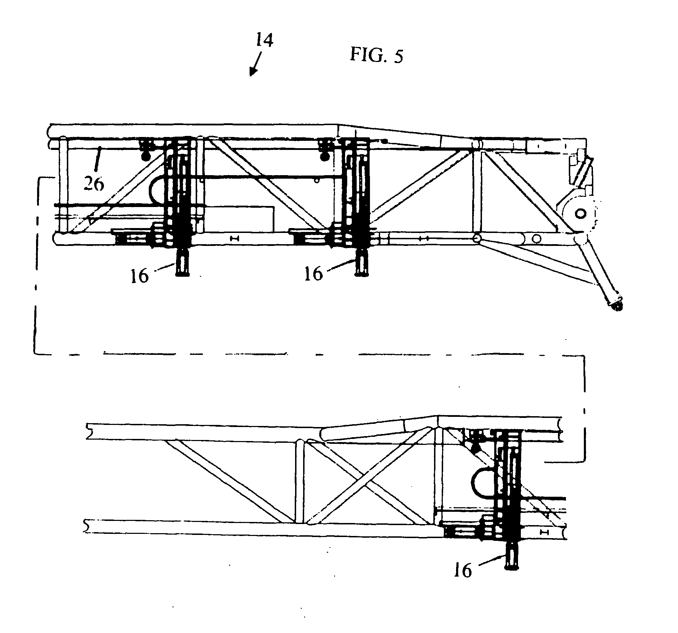

As best seen in FIG. 4 - 6, the modified section 14 is provided with means 22 for moving and securing clamp 16 along the length of the modified section 14. Movable clamp 16 is shown in different possible positions in FIG. 5. Means 22 for moving and securing clamp 16 is comprised of a top rail 24, a gear arrangement 26 (preferably rack and pinion), brake units 28, and a locking mechanism 30.

Instead of being triangular as in a standard strongback, the modified section 14 is rectangular. The gear arrangement 26 is mounted on the top rail 24 of the modified section 14. The top of the movable clamp 16 is movably engaged with the gear arrangement 26 such that the movable clamp 16 moves on the gear arrangement 26 along the longitudinal axis of the modified section 14 as the gear arrangement 26 is turned.

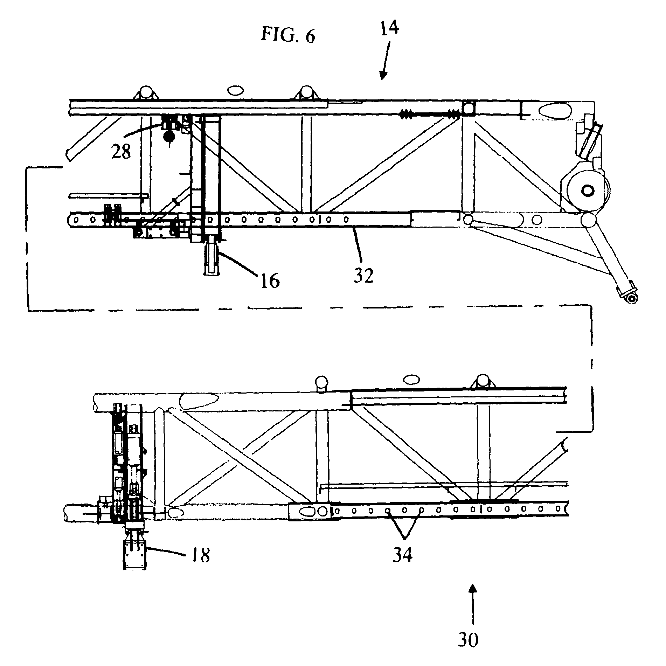

As best seen in the sectional view of FIG. 6, the locking mechanism 30 is comprised of the lower rails 32 on the modified section 14 being provided with a plurality of apertures 34 along the length of the lower rails. At the lower portion of the clamp 16, a guide pin, not shown, allows for easy alignment of the locking pin, not shown. The guide pin also adds redundant support for the clamp 16 in the event the brake units 28 fail to properly function. A locking pin, not shown, is inserted through an aperture in the movable clamp 16 and the desired apertures 34 in the lower rails to lock the clamp 16 in the desired position. Brake units 28 are positioned at the upper end of clamp 16 and hold the upper portion of the clamp 16 in the desired position on the gear arrangement 26.

In operation, the movable clamp 16 is unlocked and moved on the gear arrangement 26 by turning the gear arrangement 26 until the clamp 16 is in the desired position. The brake unit 28 is used to lock the upper portion of the clamp 16 to the gear arrangement and a pin is inserted through the apertures 34 in the lower rails 32 of the modified section 14 and the clamp 16 to lock the lower portion of the clamp 16 in position at the lower rails 32. The movable clamp 16 and fixed clamps 18 are then used to grip a pipe section as illustrated in FIG. 7 and 8. FIG. 7 and 8 illustrate the movable clamp 16 in different positions along the modified section 14 of the strongback 10.

The invention provides several advantages over the prior art fixed clamp arrangement.

The traveling clamp allows a wider range of pipe lengths to be handled on the near vertical pipe lay vessel without loss of operational efficiency. This is accomplished through selective positioning of the clamp along the longitudinal axis of the pipe joint.

The traveling clamp engage/disengage arrangement is designed to minimize the time required for clamp engagement.

The traveling clamp engagement lock-off arrangement is designed for fail safe operation (i.e., does not require hydraulic or air power for maintaining engagement during pipe lay operations).

A rack and pinion gear arrangement is used for moving/repositioning the traveling clamp along the clamp rails.

Overall cycle time efficiency is maintained by keep time required for disengaging/moving/repositioning of the traveling clamp to a minimum. Controls for repositioning and engagement of the traveling clamp are operated remotely.

The traveling clamp allows handling of pipe joints of an increased range of lengths without any loss of operational efficiency. By allowing an increased range of pipe lengths, the cost of supplying the pipe lengths is reduced, thereby lowering the overall cost of the project.

While specific embodiments and/or details of the invention have been shown and described above to illustrate the application of the principles of the invention, it is understood that this invention may be embodied as more fully described in the claims, or as otherwise known by those skilled in the art (including any and all equivalents), without departing from such principles.

## Claims

1. A strongback used for gripping and moving pipe and having a plurality of pipe clamps in fixed positions spaced along the length of the strongback, comprising:
a modified section on the strongback; and
a pipe clamp mounted on said modified section so as to be movable along the longitudinal axis of said modified section.

2. The strongback of claim 1, wherein said movable pipe clamp is mounted on a gear arrangement mounted on said modified section.

3. The strongback of claim 1 or 2, further comprising means for securing said movable clamp in a desired position along the length of said modified section.

4. The strongback of claim 3, wherein said means for securing said movable clamp comprises a brake unit.

5. The strongback of claim 3, wherein said means for securing said movable clamp comprises a pin received through apertures in said movable clamp and said modified section.

6. A strongback used for gripping and moving pipe and having a plurality of pipe clamps in fixed positions spaced along the length of the strongback, comprising:
a modified section on the strongback;
a gear arrangement mounted on said modified section;
a clamp mounted on said gear arrangement so as to be selectively movable on said gear arrangement along the longitudinal axis of said modified section; and
means for securing said movable clamp in a desired position along the length of said modified section.

7. The strongback of claim 6, wherein said means for securing said movable clamp comprises a brake unit.

8. The strongback of claim 6, wherein said means for securing said movable clamp comprises a pin received through apertures in said movable clamp and said modified section.

9. A strongback used for gripping and moving pipe and having a plurality of pipe clamps in fixed positions spaced along the length of the strongback, comprising:
a modified section on the strongback;
a gear arrangement mounted on said modified section;
a clamp mounted on said gear arrangement so as to be selectively movable on said gear arrangement along the length of said modified section; and
means for securing said movable clamp in a desired position along the length of said modified section, comprising a brake unit and a pin received through apertures in said movable clamp and said modified section.
